# FASCICULE DE BREVET EUROPEEN

(11) **EP 3 450 303 B1**
(45) Date de publication et mention de la délivrance du brevet: **08.04.2020**
(21) Numéro de dépôt: 18184635.3
(22) Date de dépôt: 20.07.2018
(51) Int. Cl.: B64C 3/24, B29C 70/78

(54) **PROCEDE DE FABRICATION D'UN PANNEAU D'UN BORD D'ATTAQUE D'AERONEF PERMETTANT D'OBTENIR UN ECOULEMENT LAMINAIRE ETENDU, BORD D'ATTAQUE COMPRENANT AU MOINS UN PANNEAU OBTENU A PARTIR DUDIT PROCEDE**
HERSTELLUNGSVERFAHREN EINES PANEELS EINER FLUGZEUGVORDERKANTE, DAS EINE AUSGEDEHNTE LAMINARE STRÖMUNG ERMÖGLICHT, FLUGZEUGVORDERKANTE, DIE MINDESTENS EIN NACH DIESEM VERFAHREN HERGESTELLTES PANEEL UMFASST
METHOD FOR MANUFACTURING A PANEL OF AN AIRCRAFT LEADING EDGE FOR PROVIDING AN EXTENDED LAMINAR FLOW, LEADING EDGE COMPRISING AT LEAST ONE PANEL OBTAINED BY THE METHOD

(30) Priorité: 30.08.2017 FR 1757970
(43) Date de publication de la demande: 06.03.2019
(73) Titulaire: AIRBUS OPERATIONS (S.A.S.), 31060 Toulouse (FR); Airbus (S.A.S.), 31700 Blagnac (FR)
(72) Inventeur: KIERBEL, Daniel, 31400 Toulouse (FR); FAROUZ-FOUQUET, Mathias, 31300 Toulouse (FR); MALARD, Laurent, 31400 Toulouse (FR)
(74) Mandataire: Gicquel, Olivier Yves Gérard

(56) Documents cités:
- EP-A1- 0 296 964
- FR-A- 1 122 894
- FR-A1- 2 975 929
- FR-A1- 3 008 920

## Description

La présente demande se rapporte à un procédé de fabrication d'un panneau d'un bord d'attaque d'aéronef permettant d'obtenir un écoulement laminaire étendu ainsi qu'à un bord d'attaque comprenant au moins un panneau obtenu à partir dudit procédé.

Une aile d'aéronef comprend une structure qui présente deux longerons reliés par des nervures, sur laquelle sont rapportés et fixés des panneaux formant la peau de l'aile. Ainsi, l'aile comprend généralement un premier panneau qui forme l'extrados, un deuxième panneau qui forme l'intrados et un ou plusieurs panneau(x) avant conformé(s) en U qui forme(nt) le bord d'attaque.

Selon un mode de réalisation, les panneaux rapportés sur la structure de l'aile sont des tôles métalliques qui sont usinées et conformées.

Pour réduire la trainée de l'aile, et par conséquent la consommation énergétique de l'aéronef, le flux d'air s'écoulant au contact de l'aile doit être laminaire, à partir du bord d'attaque de l'aile, sur la plus grande surface de l'aile.

Pour étendre l'écoulement laminaire, la rugosité de la surface des panneaux en contact avec le flux d'air doit être la plus faible possible et les tolérances dimensionnelle et géométrique des panneaux doivent être les plus réduites possibles.

Or, la réduction de ces tolérances dimensionnelle et géométrique et de la rugosité tend à complexifier le procédé de fabrication des ailes et à augmenter fortement les coûts de production.

Le document FR-2.932.106 propose d'améliorer l'écoulement laminaire au niveau d'un bord d'attaque d'une entrée d'air d'une nacelle d'aéronef en déposant un revêtement au niveau de la zone de jonction de deux panneaux adjacents. Préalablement à la mise en place du revêtement, les deux panneaux positionnés et fixés sur la structure de la nacelle sont usinés de manière à créer une rainure à cheval sur les deux panneaux. En suivant, la rainure est comblée par une enduction ou une peinture à base de silicone. Cette solution permet d'améliorer l'écoulement laminaire sur une zone restreinte.

Le document FR2975929 propose un procédé de fabrication par thermoformage de la structure d'un bord d'attaque d'une surface aérodynamique dans lequel une structure stratifiée sensiblement plane est chauffée puis pliée dans un moule de thermoformage. Ce procédé ne permet pas d'améliorer l'écoulement laminaire au niveau du bord d'attaque d'une entrée d'air d'une nacelle d'aéronef.

La présente invention vise à remédier à tout ou partie des inconvénients de l'art antérieur.

A cet effet, l'invention a pour objet un procédé de fabrication d'un panneau d'un bord d'attaque d'aéronef comprenant une plaque présentant une face interne et une face externe recouverte au moins partiellement par un revêtement, caractérisé en ce qu'il comprend les étapes de :
- Mise en place d'une plaque dans une cavité d'un moule délimitée par une surface de conformation qui est configurée pour conformer une face extérieure du panneau à obtenir et qui présente un état de surface optimisé, la plaque étant conformée de la même manière que le panneau à obtenir préalablement à sa mise en place dans le moule,
- Surmoulage d'un revêtement sur la plaque en injectant une matière dans la cavité du moule, le revêtement comportant après l'étape de surmoulage une face extérieure qui correspond à la face extérieure du panneau à obtenir et qui présente un état de surface optimisé conféré par la surface de conformation du moule.

Selon l'invention, l'état de surface optimisé du panneau supérieur et/ou inférieur avant d'un bord d'attaque est obtenu lors du surmoulage du revêtement et non par usinage ce qui tend à limiter les surcoûts de production par rapport à l'art antérieur. Par rapport à des procédés d'usinage permettant d'obtenir un état de surface optimisé, le surmoulage est une technique de production relativement peu complexe.

Selon une autre caractéristique, la plaque présente au moins un orifice traversant, la matière du revêtement étant injectée via au moins une alimentation positionnée du côté de la face interne de la plaque et au droit de l'orifice traversant.

Selon un mode de réalisation, au moins deux alimentations comprennent chacune une buse qui présente une extrémité en relief par rapport à une surface de contact du moule contre laquelle est plaquée la face interne de la plaque, l'extrémité de la buse ayant des formes complémentaires à celles de l'orifice traversant correspondant de sorte à obtenir un ajustement sans jeu entre l'extrémité de la buse et l'orifice traversant.

Selon une autre caractéristique, le moule comprend au moins un tiroir qui comporte un doigt mobile dans un alésage du moule entre un état rétracté dans lequel le doigt n'interfère pas avec la plaque et un état sorti dans lequel il interfère avec la plaque et, pour chaque tiroir, la plaque comprend un trou dont le diamètre est égal à celui du doigt et qui est positionné dans le prolongement de l'alésage du moule lorsque la plaque est correctement positionnée dans le moule.

Selon une autre caractéristique, la plaque comprend un prolongement qui s'étend au-delà d'un chant avant de la plaque et une zone arrière qui jouxte un chant arrière de la plaque ; le moule comprend des première et deuxième parties mobiles entre une position ouverte et une position fermée, les première et deuxième parties ayant des formes complémentaires, configurées pour délimiter la cavité en position fermée, la première partie comprenant une surface de contact configurée pour recevoir une face interne de la plaque et la deuxième partie comprenant la surface de conformation et des flancs de serrage disposés de part et d'autre de la surface de conformation et configurés pour serrer le prolongement et la zone arrière de la plaque contre la surface de contact de la première partie en position fermée. Selon un mode de réalisation, le prolongement est positionné de manière à dégager au moins partiellement le chant avant de la plaque.

Selon une autre caractéristique, le prolongement de la plaque est retiré après l'étape de surmoulage.

L'invention a également pour objet un panneau d'un bord d'attaque d'aéronef obtenu à partir du procédé ainsi qu'un bord d'attaque d'aéronef comprenant au moins un panneau conforme à l'invention.

Selon une configuration, le bord d'attaque d'aéronef comprend deux panneaux qui comprennent des chants latéraux avant jointifs au niveau d'un plan de jonction positionné au niveau d'une ligne de stagnation aérodynamique, pour chaque panneau, le revêtement couvrant au moins partiellement le chant avant de la plaque.

Enfin, l'invention a également pour objet un aéronef comprenant au moins un bord d'attaque conforme à l'invention.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective d'une aile qui illustre un mode de réalisation selon l'invention,
- La figure 3 est une section du profil de l'aile visible sur la figure 2,
- La figure 4 est une vue en éclaté de l'aile visible sur la figure 2,
- La figure 5 est une coupe qui illustre en éclaté l'aile visible sur la figure 2,
- La figure 6 est une coupe d'un panneau positionné dans un moule lors d'une étape de surmoulage qui illustre un mode de réalisation simplifié de l'invention,
- La figure 7 est une vue en perspective d'une plaque non revêtue qui illustre un mode de réalisation de l'invention,
- La figure 8 est une coupe transversale de la plaque visible sur la figure 7,
- La figure 9 est une coupe de la plaque non revêtue positionnée entre deux parties d'un moule en position ouverte,
- La figure 10 est une coupe du moule visible sur la figure 9 en position fermée,
- La figure 11 est une coupe d'un tiroir qui illustre un mode de réalisation de l'invention,
- La figure 12 est une coupe du moule visible sur la figure 9 au moment du remplissage,
- La figure 13 est une coupe du moule visible sur la figure 9 en fin de remplissage,
- La figure 14 est une coupe d'une plaque revêtue obtenue après le démoulage,
- La figure 15 est une coupe d'un panneau revêtu obtenu à partir de la plaque visible sur la figure 14 après une étape d'usinage,
- La figure 16 est une vue en perspective du panneau visible sur la figure 15,
- La figure 17 est une coupe d'une aile comportant deux panneaux revêtus qui illustre un mode de réalisation de l'invention,
- Les figures 18 et 19 sont des coupes qui illustrent en détails la partie avant de l'aile visible sur la figure 17 avant et après l'assemblage des panneaux revêtus,
- Les figures 20 et 21 sont des coupes qui illustrent en détails une partie intermédiaire de l'aile visible sur la figure 17 avant et après l'assemblage des panneaux revêtus, et
- La figure 22 est une coupe qui illustre en détails la partie arrière du panneau revêtu assemblé.

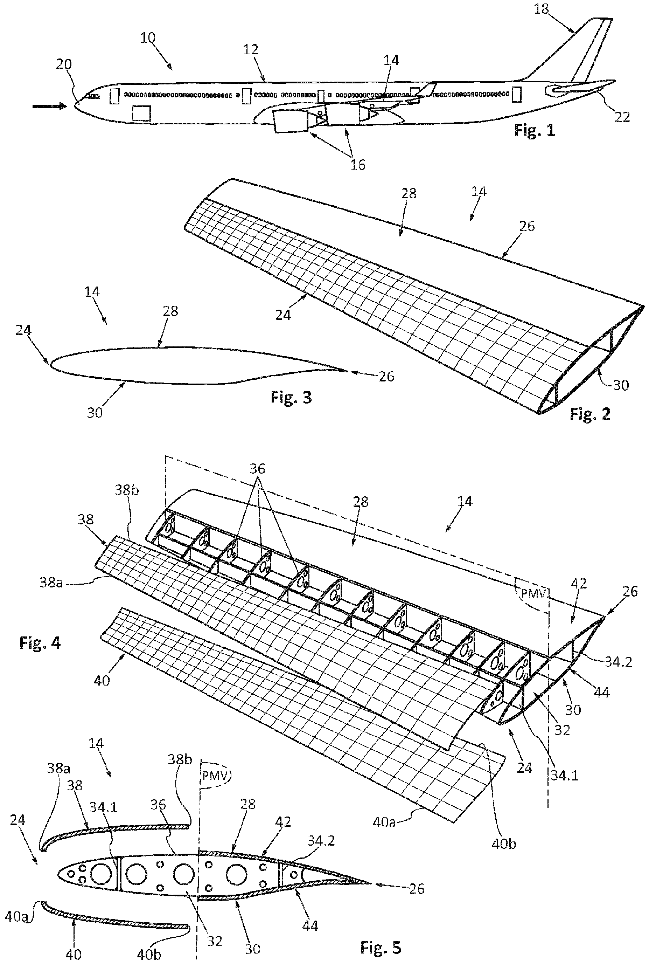

Sur la figure 1, on a représenté en 10 un aéronef qui comprend un fuselage 12, des ailes 14, des nacelles 16 positionnées sous les ailes 14 ainsi qu'un empennage 18.

Pour la suite de la description, l'avant et l'arrière font référence au sens d'écoulement des flux d'air autour de l'aéronef en vol. Ainsi, la pointe avant 20 du fuselage correspond à l'extrémité du fuselage 12 qui pénètre dans l'air en vol et la pointe arrière 22 du fuselage correspond à l'extrémité du fuselage 12 opposée à la pointe avant 20.

Comme illustré sur les figures 2 et 3, sur le plan géométrique, chaque aile 14 comprend un bord d'attaque 24 disposé à l'avant de l'aile 14, un bord de fuite 26 disposé à l'arrière, une surface supérieure 28, également appelé extrados, qui relie le bord d'attaque 24 et le bord de fuite 26 et une surface inférieure 30, également appelé intrados, qui relie également le bord d'attaque 24 et le bord de fuite 26.

Pour la suite de la description, une direction longitudinale est parallèle au bord d'attaque 24 et un plan transversal est un plan perpendiculaire à la direction longitudinale.

Selon un mode de réalisation illustré sur les figures 4, 5 et 17, chaque aile 14 comprend :
- une structure 32 composée d'un longeron avant 34.1, d'un longeron arrière 34.2 parallèles à la direction longitudinale et de nervures 36 qui relient les longerons avant et arrière 34.1, 34.2 et qui sont disposées dans des plans transversaux,
- au moins un panneau supérieur avant 38 qui s'étend du bord d'attaque 24 jusqu'à un plan médian vertical PMV de l'aile 14 (positionné entre le bord d'attaque 24 et le bord de fuite 26),
- au moins un panneau inférieur avant 40 qui s'étend du bord d'attaque 24 jusqu'au plan médian vertical PMV,
- au moins un panneau supérieur arrière 42 qui s'étend du plan médian vertical jusqu'au bord de fuite 26, et
- au moins un panneau inférieur arrière 44 qui s'étend du plan médian vertical jusqu'au bord de fuite 26.

Ces panneaux 38, 40, 42 et 44 sont reliés à la structure 32 par tous moyens appropriés.

Les panneaux supérieur et inférieur avant 38, 40 peuvent s'étendre jusqu'à un plan positionné avant ou après le plan médian vertical PMV. Selon une configuration, les panneaux supérieur et inférieur avant 38, 40 s'étendent jusqu'à un plan positionné après le plan médian vertical PMV à une distance du bord d'attaque 24 correspondant à 60% de la corde entre les bords d'attaque et de fuite 24, 26.

Selon l'exemple illustré par la figure 4, l'aile 14 comprend un seul panneau supérieur avant 38 et un seul panneau inférieur avant 40 qui s'étendent sur toute la longueur de l'aile 14. Selon d'autres exemples (non représentés), l'aile 14 comprend plusieurs panneaux supérieurs avant 38 et/ou plusieurs panneaux inférieurs avant 40, juxtaposés et répartis sur la longueur de l'aile 14.

Comme illustré sur les figures 4, 5, 17, 18 et 19, chaque panneau supérieur avant 38 comprend un bord latéral avant 38a et un bord latéral arrière 38b et chaque panneau inférieur avant 40 comprend un bord latéral avant 40a et un bord latéral arrière 40b. Le bord latéral avant 38a du panneau supérieur avant 38 et le bord latéral avant 40a du panneau inférieur avant 40 sont parallèles et jointifs au niveau d'un plan de jonction PJ positionné au niveau du bord d'attaque 24, plus particulièrement au niveau d'une ligne de stagnation aérodynamique correspondant à une zone où le flux d'air se divise en un premier flux qui s'écoule au-dessus de l'aile et un deuxième flux qui s'écoule au-dessous de l'aile et au niveau de laquelle la vitesse d'écoulement est nulle ou presque nulle.

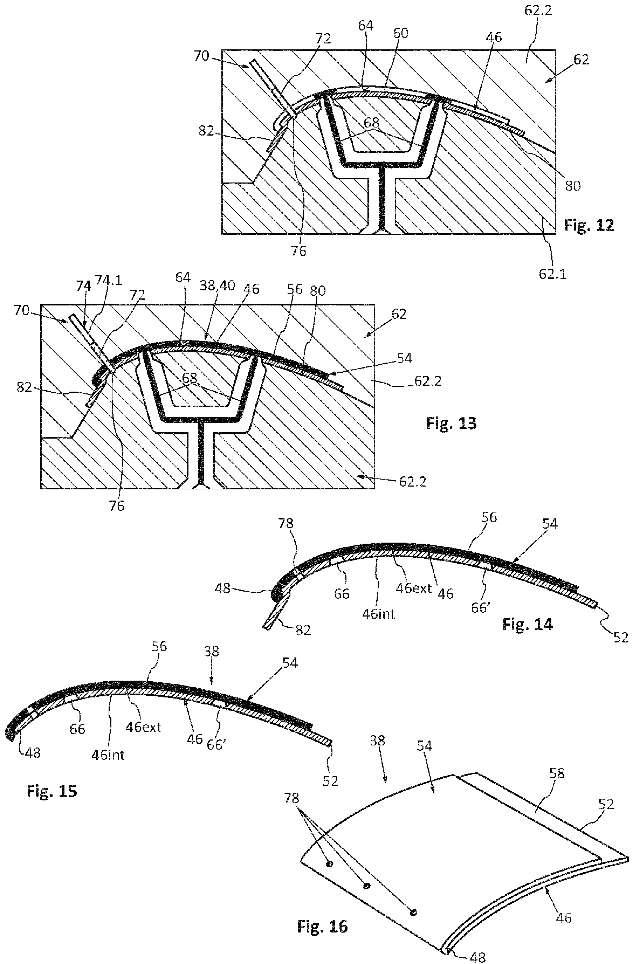

Comme illustré en détails sur les figures 15 à 23, chaque panneau supérieur ou inférieur avant 38 40 comprend une plaque 46 qui présente une face interne 46int orientée vers l'intérieur de l'aile 14, une face externe 46ext orientée vers l'extérieur de l'aile 14, un chant avant 48 et un chant arrière 52 ainsi qu'un revêtement 54 qui recouvre quasiment toute la face externe 46ext de la plaque 46 et au moins partiellement le chant avant 48 et qui présente une face extérieure 56 en contact avec les écoulements d'air en fonctionnement. Selon un premier mode de réalisation, la plaque 46 est une tôle métallique. Selon un deuxième mode de réalisation, la plaque 46 est en matériau composite.

Selon un mode de réalisation, le revêtement 54 est en silicone, en polyoléfine, en polyoxyméthylène (polyacetal) ou en polyester.

La plaque 46 a une épaisseur comprise entre 3 et 10 mm et de préférence égale à 5 mm.

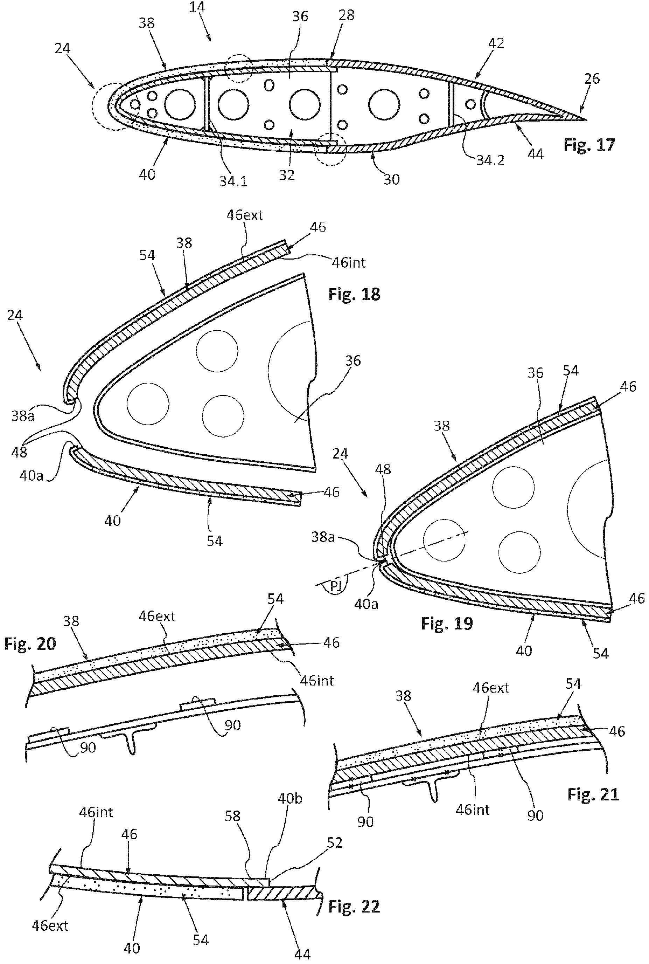

Le revêtement 54 a une épaisseur comprise entre 3 et 10 mm et de préférence égale à 3 mm. Comme illustré sur les figures 16 et 22, la face externe 46ext de la plaque 46 comprend une zone arrière 58 sous la forme d'une bande qui jouxte le chant arrière 52, non recouverte par le revêtement 54, configurée pour recevoir un autre panneau, notamment un panneau supérieur ou inférieur arrière 42, 44.

Le revêtement 54 couvre au moins partiellement le chant avant 48 de la plaque 46 à partir de la face externe 46ext. Selon un mode de réalisation visible sur la figure 15, le revêtement 54 recouvre tout le chant avant 48 de la plaque 46. Selon un autre mode de réalisation visible sur les figures 18 et 19, le revêtement 54 couvre approximativement la moitié du chant avant 48 de la plaque 46 à partir de la face externe 46ext.

Selon une caractéristique de l'invention, le panneau supérieur ou inférieur avant 38, 40 est obtenu par surmoulage, en positionnant la plaque 46 dans une cavité 60 d'un moule 62 qui présente une surface de conformation 64 configurée pour conformer la face extérieure 56 du revêtement 54 et qui est espacée de la plaque 46.

Selon un mode opératoire, la plaque 46 est conformée de la même manière que le panneau supérieur ou inférieur avant 38, 40, préalablement à son introduction dans le moule 62.

La surface de conformation 64 du moule 62 est produite de manière à avoir une rugosité la plus faible possible et des tolérances dimensionnelle et géométrique les plus réduites possibles. Par une faible rugosité, on entend une rugosité Ra et Rt de l'ordre de 0,2 µm.

Pour la suite de la description, un état de surface optimisé correspond à une rugosité la plus faible possible et des tolérances dimensionnelle et géométrique les plus réduites possibles. Selon une particularité de l'invention, lors de l'étape de surmoulage, l'état de surface optimisé de la surface de conformation 64 du moule 62 est transféré au panneau supérieur ou inférieur avant 38, 40.

Ainsi, après l'étape de surmoulage, la face extérieure 56 du revêtement 54 a un état de surface optimisé avec une rugosité Ra et Rt de l'ordre de 0,2 µm et une grande précision géométrique ou dimensionnelle.

Par conséquent, selon l'invention, seule une pièce (à savoir le moule 62 et plus particulièrement sa surface de conformation 64) est réalisée par usinage avec un état de surface optimisé. L'état de surface optimisé des panneaux supérieur ou inférieur avant 38, 40 est obtenu lors du surmoulage du revêtement 54 et non par usinage ce qui tend à limiter les surcoûts de production par rapport à l'art antérieur. Par rapport à des procédés d'usinage permettant d'obtenir un état de surface optimisé, le surmoulage est une technique de production relativement peu complexe.

Selon une autre caractéristique de l'invention, la plaque 46 comprend au moins un orifice traversant 66 (qui débouche au niveau des faces interne 46int et externe 46ext) et le surmoulage du revêtement 54 est obtenu en injectant la matière depuis la face interne 46int de la plaque 46. Ainsi, le moule 62 comprend au moins une alimentation 68 positionnée du côté de la face interne 46int de la plaque 46 et débouchant au droit de chaque orifice traversant 66.

Cette caractéristique permet de ne pas avoir d'aspérité au niveau de la face extérieure 56 du revêtement 54 en raison de l'alimentation de la matière.

Le nombre d'orifices traversants 66 est déterminé de manière à optimiser le remplissage de la matière injectée. A titre indicatif, chaque orifice traversant 66 est cylindrique et a un diamètre de l'ordre de 20 mm.

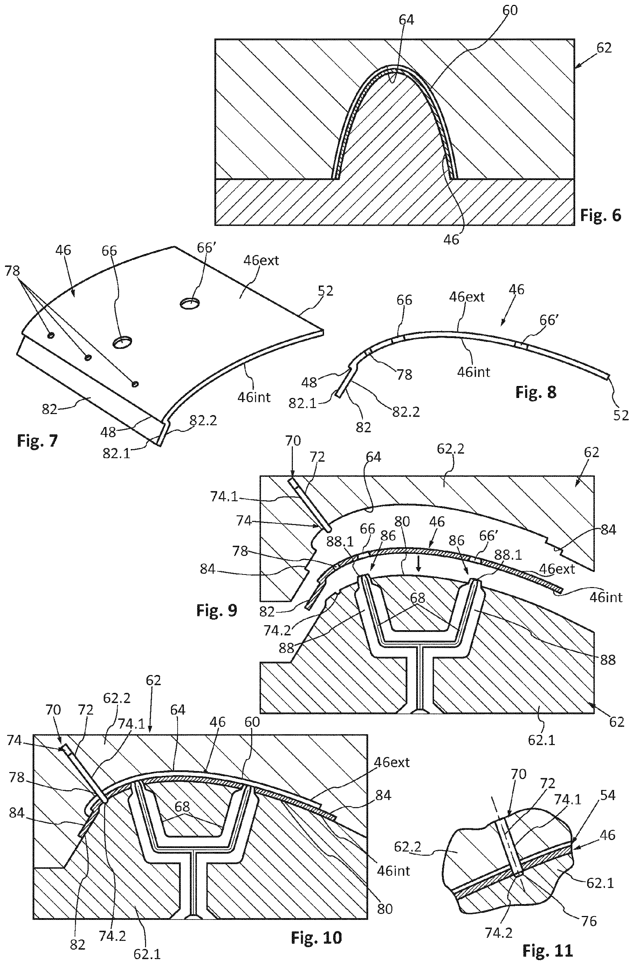

Selon une configuration visible sur les figures 7 à 13, la plaque 46 comprend au moins une paire d'orifices traversants 66, 66' positionnés dans un même plan transversal. En fonction de sa longueur, la plaque 46 comprend plusieurs paires d'orifices traversants 66, 66' réparties sur la longueur de la plaque 46.

En parallèle, le moule 62 comprend autant d'alimentations 68 que d'orifices traversants 66, 66', qui sont agencées sur le moule 62 de la même manière que les orifices traversants 66, 66'.

Selon une caractéristique de l'invention, le moule 62 comprend au moins un tiroir 70 pour maintenir la plaque 46 lors de l'injection de matière et garantir ainsi une très grande précision dimensionnelle et/ou géométrique. Ce tiroir 70 permet également de protéger localement une zone de toute entrée de matière moulée afin de laisser une ouverture libre pour l'installation ultérieure de tout dispositif.

Selon un mode de réalisation visible sur les figures 10 et 11, chaque tiroir 70 comprend un doigt 72 mobile dans un alésage 74 du moule 62 entre un état rétracté dans lequel le doigt 72 n'interfère pas avec la plaque 46 et un état sorti dans lequel il interfère avec la plaque 46. Le doigt 72 se présente sous la forme d'un cylindre qui comprend un chanfrein à une première extrémité 76 configurée pour traverser la plaque 46.

L'alésage 74 a un diamètre égal (au jeu de coulissement près) à celui du doigt 72 et débouche dans la cavité 60 du moule 62. Avantageusement, l'alésage 74 comprend un premier tronçon 74.1 qui est positionné d'un côté de la cavité 60 du moule 62, qui débouche au niveau de la surface de conformation 64 et qui a une longueur suffisante pour loger la totalité du doigt 72 à l'état rétracté ainsi qu'un deuxième tronçon 74.2 qui est positionné de l'autre côté de la cavité 60 du moule 62, dans le prolongement du premier tronçon 74.1 et qui est configuré pour recevoir la première extrémité 76 du doigt 72 à l'état sorti.

Pour chaque tiroir 70, la plaque 46 comprend un trou 78 dont le diamètre est égal (au jeu de coulissement près) à celui du doigt 72 et qui est positionné dans le prolongement de l'alésage 74 du moule 62 lorsque la plaque 46 est correctement positionnée dans le moule 62.

Le moule 62 comprend généralement plusieurs tiroirs 70.

Le moule 62 comprend des première et deuxième parties 62.1 et 62.2 mobiles entre une position ouverte visible sur la figure 9 et une position fermée visible sur la figure 10, les première et deuxième parties 62.1 et 62.2 ayant des formes complémentaires, configurées pour délimiter la cavité 60 en position fermée.

La première partie 62.1 comprend les alimentations 68 et une surface de contact 80 conformée de la même manière que la surface interne 46int de la plaque 46 et configurée pour recevoir ladite surface interne 46int lors de l'étape de surmoulage.

La deuxième partie 62.2 comprend le ou les tiroir(s) 70 et la surface de conformation 64.

Pour assurer le maintien en position de la plaque 46 lors du surmoulage, la plaque 46 comprend un prolongement 82 qui s'étend au-delà du chant avant 48 et qui est positionné de manière à dégager au moins partiellement le chant avant 48. Ce prolongement 82 se présente sous la forme d'une bande de matière qui a la même épaisseur que le reste de la plaque 46 et qui présente une première surface 82.1 dans le même plan que la face interne 46int de la plaque 46 et une deuxième surface 82.2 décalée par rapport à la face interne 46int de la plaque 46 afin que le prolongement 82 dégage totalement le chant avant 48.

Ce prolongement 82 et la zone arrière 58 sont configurés pour être pincés par les première et deuxième parties 62.1 et 62.2 du moule en position fermée.

En complément, la deuxième partie 62.2 du moule 62 comprend des flancs de serrage 84 disposés de part et d'autre de la surface de conformation 64 et configurés pour serrer le prolongement 82 et la zone arrière 58 de la plaque 46 contre la surface de contact 80 de la première partie 62.1 du moule en position fermée.

Selon une autre caractéristique, le moule 62 comprend au moins deux centreurs 86 en relief par rapport à la surface de contact 80 du moule 62 pour faciliter la mise en place de la plaque 46 dans le moule.

Selon un mode de réalisation, au moins deux alimentations 68 comprennent chacune une buse 88 qui présente une extrémité 88.1 en relief par rapport à la surface de contact 80, comme illustré sur la figure 9, et dont les formes sont complémentaires à celles de l'orifice traversant 66 correspondant de sorte à obtenir un ajustement sans jeu entre l'extrémité 88.1 de la buse 88 et l'orifice traversant 66, 66'.

Afin de garantir un remplissage optimal de la cavité 60 lors du surmoulage, le moule 62 comprend un système pour favoriser l'extraction ou l'échappement de l'air contenu dans la cavité 60.

Selon un mode de réalisation, le moule 62 comprend un système de mise sous vide qui extrait l'air de la cavité 60 préalablement à et/ou lors de l'injection de matière.

Selon un autre mode de réalisation, un jeu de l'ordre de 0,05 mm est laissé entre les première et deuxième parties 62.1, 62.2 du moule 62 pour favoriser l'échappement de l'air tout en empêchant la matière injectée de s'y infiltrer.

Pour l'injection de matière, le moule 62 peut être positionné sur une presse à injection.

Le procédé de fabrication d'un panneau de bord d'attaque est maintenant décrit au regard des figures 7 à 16.

La première étape consiste à réaliser la plaque 46 et à la conformer selon le profil du panneau 38, 40 à obtenir, comme illustré sur les figures 7 et 8. La plaque 46 peut être une tôle métallique usinée ou être réalisée à partir de matériau composite. Contrairement aux panneaux de l'art antérieur, la plaque 46 peut avoir une rugosité élevée et être fabriquée avec des tolérances dimensionnelle et géométrique importantes dans la mesure où cette plaque 46 sera revêtue ultérieurement d'un revêtement 54.

En suivant, la plaque 46 est positionnée sur la surface de contact 80 de la première partie 62.1 du moule 62. Les centreurs 86 facilitent la mise en place de la plaque 46 dans sa bonne position.

Le moule 62 est fermé comme illustré sur la figure 10. Le prolongement 82 et la zone arrière 58 de la plaque 46 sont serrés entre les première et deuxième parties 62.1, 62.2 du moule 62 et le (ou les) tiroir(s) 70 est (sont) positionné(s) à l'état sorti. Dès lors, l'injection de matière peut commencer, comme illustré sur la figure 12 jusqu'au remplissage complet de la cavité 60, comme illustré sur la figure 13.

Après un refroidissement, la plaque 46 revêtue est sortie du moule, comme illustré sur la figure 14. Enfin, le prolongement 82 de la plaque 46 est retiré, par usinage par exemple, de manière à obtenir un panneau supérieur ou inférieur avant 38, 40 revêtu, comme illustré sur les figures 15 et 16.

A l'issue de ce procédé de fabrication, le panneau supérieur ou inférieur avant 38, 40 comprend une face en contact avec les écoulements d'air en fonctionnement (qui correspond à la face extérieure 56 du revêtement 54) qui présente une faible rugosité et de grandes précisions dimensionnelle et géométrique qui lui ont été conférées lors du surmoulage par la surface de conformation 64 du moule 62.

Selon un autre mode de réalisation, la plaque 46 ne comprend aucun orifice traversant 66 et le surmoulage du revêtement 54 est obtenu en injectant la matière depuis la face externe 46ext de la plaque 46. Ainsi, le moule 62 comprend au moins une alimentation 68 positionnée du côté de la face externe 46ext de la plaque 46 et débouchant au niveau de la surface de conformation 64. Les extrémités 88.1 des buses 88 peuvent être en saillie par rapport à la surface de conformation 64. Selon ce mode de réalisation, au droit des creux laissés par les extrémités 88.1 des buses 88 au moment de l'injection, des trous sont réalisés par contreperçage pour des fixations utilisées pour relier le panneau supérieur ou inférieur avant 38, 40 à la structure 32. Une fois le panneau supérieur ou inférieur avant 38, 40 fixé à la structure 32, les trous sont comblés.

Ce procédé de fabrication est répétable et stable et ne comprend pas d'éventuelles actions manuelles correctives comme lors de la mise en forme des bords d'attaque de l'art antérieur. Le panneau supérieur ou inférieur avant 38, 40 est en suivant rapporté et fixé sur la structure 32 de l'aile 14. De préférence, des pattes de fixation sont prévues au niveau de la face interne 46int de la plaque 46 pour permettre la fixation du panneau supérieur ou inférieur avant 38, 40 sans recourir à des fixations qui le traversent.

Lors de la fixation du panneau supérieur ou inférieur avant 38, 40 sur la structure 32, la face extérieure 56 est utilisée comme surface de référence contrairement à l'art antérieur. Comme illustré sur les figures 20 et 22, des cales 90 peuvent être interposées entre le panneau supérieur ou inférieur avant 38, 40 et la structure 32 afin que la surface extérieure 56 soit correctement positionnée.

Au niveau du bord d'attaque, les panneaux supérieur et inférieur avant 38 et 40 sont jointifs, comme illustré sur la figure 19. Enfin, les panneaux supérieur et inférieur arrière 42 et 44 sont mis en place et fixés sur la structure 32 de l'aile 14, ces panneaux 42 et 44 recouvrant la zone arrière 58 des panneaux supérieur et inférieur avant 38 et 40, comme illustré sur la figure 23.

Selon un mode de réalisation simplifié illustré par la figure 6, le bord d'attaque comprend un panneau en forme de U qui présente une plaque 46 en forme de U revêtue d'un revêtement 54 lors d'une étape de surmoulage dans un moule 62 qui présente une surface de conformation 64 avec un état de surface optimisé qui confère à la surface extérieure 56 du revêtement 54 un état de surface optimisé.

Le bord d'attaque ainsi obtenu permet d'étendre les écoulements laminaire vers l'arrière de l'aile ce qui tend à réduire la traînée de l'ordre de 8% à la vitesse de croisière et la consommation de kérosène de l'ordre de 4 à 5%.

Bien que décrite appliquée au bord d'attaque d'une aile, les panneaux obtenus selon le procédé de fabrication de l'invention peuvent être mis en place au niveau d'autres bords d'attaque de l'aéronef.

## Revendications

1. Procédé de fabrication d'un panneau (38, 40) d'un bord d'attaque d'aéronef comprenant une plaque (46) présentant une face interne (46int) et une face externe (46ext) recouverte au moins partiellement par un revêtement (54), **caractérisé en ce qu'**il comprend les étapes de :
- Mise en place de la plaque (46) dans une cavité (60) d'un moule (62) délimitée par une surface de conformation (64) qui est configurée pour conformer une face extérieure du panneau (38, 40) à obtenir et qui présente un état de surface optimisé, la plaque (46) étant conformée de la même manière que le panneau (38, 40) à obtenir préalablement à sa mise en place dans le moule (62),
- Surmoulage du revêtement (54) sur la plaque (46) en injectant une matière dans la cavité (60) du moule (62), le revêtement (54) comportant après l'étape de surmoulage une face extérieure (56) qui correspond à la face extérieure du panneau (38, 40) à obtenir et qui présente un état de surface optimisé conféré par la surface de conformation (64) du moule (62).

2. Procédé de fabrication d'un panneau d'un bord d'attaque d'aéronef selon la revendication 1, **caractérisé en ce que** la plaque (46) présente au moins un orifice traversant (66, 66') et **en ce que** la matière du revêtement (54) est injectée via au moins une alimentation (68) positionnée du côté de la face interne (46int) de la plaque (46) et au droit de l'orifice traversant (66, 66').

3. Procédé de fabrication d'un panneau d'un bord d'attaque d'aéronef selon la revendication 2, **caractérisé en ce qu'**au moins deux alimentations (68) comprennent chacune une buse (88) qui présente une extrémité (88.1) en relief par rapport à une surface de contact (80) du moule (62) contre laquelle est plaquée la face interne (46int) de la plaque (46), l'extrémité (88.1) de la buse (88) ayant des formes complémentaires à celles de l'orifice traversant (66) correspondant de sorte à obtenir un ajustement sans jeux entre l'extrémité (88.1) de la buse (88) et l'orifice traversant (66).

4. Procédé de fabrication d'un panneau d'un bord d'attaque d'aéronef selon l'une des revendications précédentes, **caractérisé en ce que** le moule (62) comprend au moins un tiroir (70) qui comporte un doigt (72) mobile dans un alésage (74) du moule (62) entre un état rétracté dans lequel le doigt (72) n'interfère pas avec la plaque (46) et un état sorti dans lequel il interfère avec la plaque (46) et **en ce que**, pour chaque tiroir (70), la plaque (46) comprend un trou (78) dont le diamètre est égal à celui du doigt (72) et qui est positionné dans le prolongement de l'alésage (74) du moule (62) lorsque la plaque (46) est correctement positionnée dans le moule (62).

5. Procédé de fabrication d'un panneau d'un bord d'attaque d'aéronef selon l'une des revendications précédentes, **caractérisé en ce que** la plaque (46) comprend un prolongement (82) qui s'étend au-delà d'un chant avant (48) de la plaque (46) et une zone arrière (58) qui jouxte un chant arrière (48) de la plaque (46) et **en ce que** le moule (62) comprend des première et deuxième parties (62.1, 62.2) mobiles entre une position ouverte et une position fermée, les première et deuxième parties (62.1, 62.2) ayant des formes complémentaires, configurées pour délimiter la cavité (60) en position fermée, la première partie (62.1) comprenant une surface de contact (80) configurée pour recevoir une face interne (46int) de la plaque (46) et la deuxième partie (62.2) comprenant la surface de conformation (64) et des flancs de serrage (84) disposés de part et d'autre de la surface de conformation (64) et configurés pour serrer le prolongement (82) et la zone arrière (58) de la plaque (46) contre la surface de contact (80) de la première partie (62.1) en position fermée.

6. Procédé de fabrication d'un panneau d'un bord d'attaque d'aéronef selon la revendication précédente, **caractérisé en ce que** le prolongement (82) est positionné de manière à dégager au moins partiellement le chant avant (48) de la plaque (46).

7. Procédé de fabrication d'un panneau d'un bord d'attaque d'aéronef selon la revendication 5 ou 6, **caractérisé en ce que** le prolongement (82) de la plaque (46) est retiré après l'étape de surmoulage.

8. Panneau d'un bord d'attaque d'aéronef obtenu à partir du procédé selon l'une des revendications précédentes.

9. Bord d'attaque d'aéronef comprenant au moins un panneau selon la revendication 8.

10. Bord d'attaque d'aéronef selon la revendication 9, **caractérisé en ce qu'**il comprend deux panneaux (38, 40) qui comprennent des chants latéraux avant (38a, 40a) jointifs au niveau d'un plan de jonction positionné au niveau d'une ligne de stagnation aérodynamique, pour chaque panneau (38, 40), le revêtement (54) couvrant au moins partiellement le chant avant (48) de la plaque (46).

11. Aéronef comprenant au moins un bord d'attaque selon la revendication 9 ou 10.

## Patentansprüche

1. Verfahren zur Herstellung eines Paneels (38, 40) einer Vorderkante eines Luftfahrzeugs, welches eine Platte (46) umfasst, die eine Innenfläche (46int) und eine Außenfläche (46ext), die wenigstens teilweise mit einer Beschichtung (54) bedeckt ist, aufweist, **dadurch gekennzeichnet, dass** es die Schritte umfasst:
- Anbringung der Platte (46) in einem Hohlraum (60) einer Form (62), der von einer Formgebungsfläche (64) begrenzt wird, welche dafür ausgebildet ist, eine Außenfläche des herzustellenden Paneels (38, 40) zu formen, und welche einen optimierten Oberflächenzustand aufweist, wobei die Platte (46) vor ihrer Anbringung in der Form (62) auf dieselbe Weise wie das herzustellende Paneel (38, 40) geformt wird,
- Aufformen der Beschichtung (54) auf die Platte (46) durch Einspritzen eines Materials in den Hohlraum (60) der Form (62), wobei die Beschichtung (54) nach dem Schritt des Aufformens eine Außenfläche (56) aufweist, welche der Außenfläche des herzustellenden Paneels (38, 40) entspricht und welche einen optimierten Oberflächenzustand aufweist, der ihr von der Formgebungsfläche (64) der Form (62) verliehen wird.

2. Verfahren zur Herstellung eines Paneels einer Vorderkante eines Luftfahrzeugs nach Anspruch 1, **dadurch gekennzeichnet, dass** die Platte (46) wenigstens eine Durchgangsöffnung (66, 66') aufweist, und dadurch, dass das Material der Beschichtung (54) über wenigstens eine Zuführung (68) eingespritzt wird, die auf der Seite der Innenfläche (46int) der Platte (46) und genau gegenüber der Durchgangsöffnung (66, 66') positioniert ist.

3. Verfahren zur Herstellung eines Paneels einer Vorderkante eines Luftfahrzeugs nach Anspruch 2, **dadurch gekennzeichnet, dass** wenigstens zwei Zuführungen (68) jeweils eine Düse (88) umfassen, welche ein Ende (88.1) aufweist, das in Bezug auf eine Kontaktfläche (80) der Form (62), an welche die Innenfläche (46int) der Platte (46) angepresst wird, vorstehend ist, wobei das Ende (88.1) der Düse (88) Formen aufweist, die zu denjenigen der entsprechenden Durchgangsöffnung (66) komplementär sind, so dass eine spielfreie Passung zwischen dem Ende (88.1) der Düse (88) und der Durchgangsöffnung (66) erhalten wird.

4. Verfahren zur Herstellung eines Paneels einer Vorderkante eines Luftfahrzeugs nach einem der vorhergehenden Ansprüche, **dadurch gekennzeichnet, dass** die Form (62) wenigstens einen Schieber (70) umfasst, welcher einen Finger (72) aufweist, der in einer Bohrung (74) der Form (62) zwischen einem zurückgezogenen Zustand, in welchem der Finger (72) nicht mit der Platte (46) kollidiert, und einem ausgefahrenen Zustand, in welchem er mit der Platte (46) kollidiert, beweglich ist, und dadurch, dass für jeden Schieber (70) die Platte (46) ein Loch (78) umfasst, dessen Durchmesser gleich demjenigen des Fingers (72) ist und das in der Verlängerung der Bohrung (74) der Form (62) positioniert ist, wenn die Platte (46) korrekt in der Form (62) positioniert ist.

5. Verfahren zur Herstellung eines Paneels einer Vorderkante eines Luftfahrzeugs nach einem der vorhergehenden Ansprüche, **dadurch gekennzeichnet, dass** die Platte (46) eine Verlängerung (82), welche sich über eine vordere Kante (48) der Platte (46) hinaus erstreckt, und einen hinteren Bereich (58), welcher an eine hintere Kante (48) der Platte (46) angrenzt, umfasst, und dadurch, dass die Form (62) einen ersten und einen zweiten Teil (62.1, 62.2) umfasst, die zwischen einer offenen Position und einer geschlossenen Position beweglich sind, wobei der erste und der zweite Teil (62.1, 62.2) komplementäre Formen aufweisen, die dafür ausgebildet sind, in der geschlossenen Position den Hohlraum (60) zu begrenzen, wobei der erste Teil (62.1) eine Kontaktfläche (80) umfasst, die dafür ausgebildet ist, eine Innenfläche (46int) der Platte (46) aufzunehmen, und der zweite Teil (62.2) die Formgebungsfläche (64) und Klemmflanken (84), die beiderseits der Formgebungsfläche (64) angeordnet sind und dafür ausgelegt sind, in der geschlossenen Position die Verlängerung (82) und den hinteren Bereich (58) der Platte (46) an die Kontaktfläche (80) des ersten Teils (62.1) zu pressen, umfasst.

6. Verfahren zur Herstellung eines Paneels einer Vorderkante eines Luftfahrzeugs nach dem vorhergehenden Anspruch, **dadurch gekennzeichnet, dass** die Verlängerung (82) so positioniert wird, dass die vordere Kante (48) der Platte (46) wenigstens teilweise freigelegt wird.

7. Verfahren zur Herstellung eines Paneels einer Vorderkante eines Luftfahrzeugs nach Anspruch 5 oder 6, **dadurch gekennzeichnet, dass** die Verlängerung (82) der Platte (46) nach dem Schritt des Aufformens entfernt wird.

8. Paneels einer Vorderkante eines Luftfahrzeugs, welches mittels des Verfahrens nach einem der vorhergehenden Ansprüche erhalten wird.

9. Vorderkante eines Luftfahrzeugs, welche wenigstens ein Paneel nach Anspruch 8 umfasst.

10. Vorderkante eines Luftfahrzeugs nach Anspruch 9, **dadurch gekennzeichnet, dass** sie zwei Paneele (38, 40) umfasst, welche vordere Seitenkanten (38a, 40a) umfassen, die an einer Verbindungsebene aneinanderstoßen, die an einer Staustromlinie positioniert ist, wobei für jedes Paneel (38, 40) die Beschichtung (54) die vordere Kante (48) der Platte (46) wenigstens teilweise bedeckt.

11. Luftfahrzeug, welches wenigstens eine Vorderkante nach Anspruch 9 oder 10 umfasst.

## Claims

1. Method for manufacturing an aircraft leading edge panel (38, 40) comprising a sheet (46) exhibiting an internal face (46int), an external face (46ext) at least partially coated with a coating (54) **characterized in that** it comprises the steps of:
- placing the sheet (46) in a cavity (60) of a mould (62), which cavity is delimited by a shaping surface (64) which is configured to shape an exterior face of the panel (38, 40) that is to be obtained, and which exhibits an optimized surface finish, the sheet (46) being shaped in the same way as the panel (38, 40) that is to be obtained, prior to being placed in the mould (62),
- overmoulding the coating (54) onto the sheet (46) by injecting a material into the cavity (60) of the mould (62), the coating (54) comprising, after the overmoulding step, an exterior face (56) which corresponds to the exterior face of the panel (38, 40) that is to be obtained and which exhibits an optimized surface finish conferred by the shaping surface (64) of the mould (62).

2. Method for manufacturing an aircraft leading edge panel according to Claim 1, **characterized in that** the sheet (46) exhibits at least one through-orifice (66, 66'), and **in that** the coating material (54) is injected via at least one feed (68) positioned on the side of the internal face (46int) of the sheet (46) and in line with the through-orifice (66, 66').

3. Method for manufacturing an aircraft leading edge panel according to Claim 2, **characterized in that** at least two feeds (68) each comprise a nozzle (88) which exhibits an end (88.1) in raised relief with respect to a contact surface (80) of the mould (62) against which surface the internal face (46int) of the sheet (46) is pressed, the end (88.1) of the nozzle (88) having shapes that complement those of the corresponding through-orifice (66) so as to obtain a clearance-free fit between the end (88.1) of the nozzle (88) and the through-orifice (66) .

4. Method for manufacturing an aircraft leading edge panel according to one of the preceding claims, **characterized in that** the mould (62) comprises at least one slide (70) which comprises a finger (72) able to move in a bore (74) of the mould (62) between a retracted state in which the finger (72) does not interfere with the sheet (46) and a deployed state in which it interferes with the sheet (46) and **in that**, for each slide (70), the sheet (46) comprises a hole (78) the diameter of which is equal to that of the finger (72) and which is positioned in the continuation of the bore (74) of the mould (62) when the sheet (46) is correctly positioned in the mould (62).

5. Method for manufacturing an aircraft leading edge panel according to one of the preceding claims, **characterized in that** the sheet (46) comprises a continuation (82) which extends beyond a front edge face (48) of the sheet (46), and a rear zone (58) which adjoins a rear edge face (48) of the sheet (46), and **in that** the mould (62) comprises first and second moving parts (62.1, 62.2) able to move between an open position and a closed position, the first and second parts (62.1, 62.2) having complementing shapes configured to delimit the cavity (60) in the closed position, the first part (62.1) comprising a contact surface (80) configured to receive an internal face (46int) of the sheet (46) and the second part (62.2) comprising the shaping surface (64) and clamping flanks (84) positioned one at each end of the shaping surface (64) and configured to clamp the continuation (82) and the rear zone (58) of the sheet (46) against the contact surface (80) of the first part (62.1) in the closed position.

6. Method for manufacturing an aircraft leading edge panel according to the preceding claim, **characterized in that** the continuation (82) is positioned in such a way as to leave the front edge face (48) of the sheet (46) at least partially clear.

7. Method for manufacturing an aircraft leading edge panel according to Claim 5 or 6, **characterized in that** the continuation (82) of the sheet (46) is removed after the overmoulding step.

8. Aircraft leading edge panel obtained using the method according to one of the preceding claims.

9. Aircraft leading edge comprising at least one panel according to Claim 8.

10. Aircraft leading edge according to Claim 9, **characterized in that** it comprises two panels (38, 40) which comprise front lateral edge faces (38a, 40a) which come together contiguously at a junction plane positioned along an aerodynamic stagnation line, for each panel (38, 40), the coating (54) at least partially covering the front edge face (48) of the sheet (46).

11. Aircraft comprising at least one leading edge according to Claim 9 or 10.
